# EUROPÄISCHE PATENTSCHRIFT

(11) **EP 3 430 175 B1**
(45) Veröffentlichungstag und Bekanntmachung des Hinweises auf die Patenterteilung: **16.09.2020**
(21) Anmeldenummer: 17710844.6
(22) Anmeldetag: 03.03.2017
(51) Int. Cl.: C21D 8/02, B21B 37/74, B21B 37/76, C21D 8/04, C21D 9/46, C21D 11/00

(54) **VERFAHREN ZUM WALZEN UND/ODER ZUR WÄRMEBEHANDLUNG EINES METALLISCHEN BANDES**
METHOD FOR ROLLING AND/OR HEAT TREATING A METAL STRIP
PROCÉDÉ DE LAMINAGE ET/OU DE TRAITEMENT THERMIQUE D'UNE BANDE MÉTALLIQUE

(30) Priorität: 14.03.2016 DE 102016204147; 17.11.2016 DE 102016222644
(43) Veröffentlichungstag der Anmeldung: 23.01.2019
(73) Patentinhaber: SMS Group GmbH, 40237 Düsseldorf (DE)
(72) Erfinder: BIGLARI, Mostafa, 70173 Stuttgart (DE); BEHRENS, Holger, 40699 Erkrath (DE); KLEIN, Carsten Andreas, 40237 Düsseldorf (DE); KLINKENBERG, Christian, 58313 Herdecke (DE); KÜMMEL, Lutz, 41363 Jüchen (DE); SOMMERS, Ulrich, 40627 Düsseldorf (DE)
(74) Vertreter: Kross, Ulrich
(86) Internationale Anmeldenummer: PCT/EP2017/054978
(87) Internationale Veröffentlichungsnummer: WO 2017/157692

(56) Entgegenhaltungen:
- WO-A1-98/18970
- WO-A1-2004/050923
- WO-A1-2014/177341
- WO-A1-2016/071132
- WO-A1-2016/189144
- WO-A1-2017/050311
- US-A- 4 274 273
- US-B1- 6 546 310

## Beschreibung

Die Erfindung betrifft ein Verfahren zum Walzen und/oder zur Wärmebehandlung eines metallischen Produkts, insbesondere eines Bandes, wobei das Produkt an einer ersten Stelle einer Walz- und/oder Wärmebehandlungsoperation unterzogen wird, die von einer Steuer- und/oder Regelvorrichtung gesteuert und/oder geregelt wird, wobei das Produkt an einer der ersten Stelle nachgelagerten zweiten Stelle einer Messung mittels einer Messvorrichtung unterzogen wird, wobei das Produkt an einer der zweiten Stelle nachgelagerten dritten Stelle einer weiteren Bearbeitungsoperation unterzogen wird und wobei das Produkt an einer der dritten Stelle nachgelagerten vierten Stelle in einer vorgegebenen Qualität vorliegt.

Bei der vorgegebenen Qualität kann es sich, muss es sich aber nicht, um die Endqualität des Produkts handeln, wobei das Produkt insbesondere ein Band oder ein Blech ist. Die Abfolge der genannten Stellen ist insbesondere entlang einer Förderrichtung oder im Sinne der Produktionsreihenfolge zu verstehen. Im Zusammenhang mit der vorliegenden Erfindung sei angemerkt, dass unter dem Begriff des Produkts vor allem metallische Bänder oder Bleche zu verstehen sind.

Ein Verfahren der gattungsgemäßen Art ist aus der WO 98/18970 A1 bekannt. Ähnliche und andere Lösungen zeigen die WO 2016/071132 A1, die WO 2017/050311 A1 und die WO 2016/189144 A1.

Nachfolgend wird auf ein Verfahren zum Walzen bzw. zur Wärmebehandlung eines Bandes oder Blechs abgestellt, was allerdings nicht zwingend ist; generell sind beliebige metallische Produkte möglich.

Die mechanischen Eigenschaften eines metallischen Produkts, die am Ende seiner Herstellung vorliegen, gehören zu den wesentlichen Kriterien für die Qualität eines Endprodukts, das aus dem metallischen Produkt hergestellt wird. Diese mechanischen Eigenschaften werden wesentlich durch die Mikrostruktur des Materials des Bandes bestimmt.

Derzeit wird bei der Herstellung eines qualitativ hochwertigen metallischen Bandes das Vorgehen nach einem genau definierten Prozess vorgegeben, dessen Eckdaten weitgehend festgelegt sind. Die Fertigungsparameter werden somit auf einem solchen Niveau gehalten, dass die benötigte Qualität des Bandes sichergestellt ist. Dabei werden insbesondere Fertigungs-Parameter, wie die Temperatur, die Fördergeschwindigkeit des Bandes in der Fertigungsanlage und die Walzkräfte, festgelegt bzw. überwacht, die allerdings nur indirekt mit der Mikrostruktur des Bandes korrelieren. Übliche Änderungen innerhalb der gesamten Prozesskette können die Korrelation zwischen den gemessenen Parametern und der Mikrostruktur des Bandes verschieben, und zwar in einer solchen Weise, dass das Band dann nicht mehr die geforderten mechanischen Eigenschaften aufweist. Beispielsweise können bereits relativ kleine Abweichungen der chemischen Zusammensetzung bei der Produktion von Zwei-Phasen-Stahl das benötigte Temperaturprofil, das für die gewünschten Anteile von Austenit und Ferrit während der Wärmebehandlung benötigt wird, so verschieben, dass das Produkt zu brüchig oder zu weich ist.

Der Produktionsprozess kann verbessert werden, wenn genauere Informationen über die Mikrostruktur und die mechanischen Eigenschaften während des Produktionsprozesses verfügbar sind. Möglichkeiten, die dies erlauben, sind folgende:
Es kann ein Computermodell eingesetzt werden, das die verfügbaren messbaren Parameter, wie Temperatur und chemische Zusammensetzung sowie Walzkräfte, zu Grunde legt, um einen oder mehrere Parameter zu berechnen, die mit der Mikrostruktur des Materials bzw. den mechanischen Eigenschaften korreliert, um auf diese Art den Fertigungsprozess anzupassen.

Es können auch Online-Messungen durchgeführt werden, die Eigenschaften des Bandes erfassen, die durch die Mikrostruktur des Materials bestimmt werden, um auf diese Weise den Fertigungsprozess über eine Steuerungseinrichtung zu beeinflussen. Hinsichtlich der erstgenannten Möglichkeit des Einsatzes eines Computermodells, wie es beispielsweise in der EP 2 742 158 B1 beschrieben ist, ergibt sich der Nachteil, dass aufwändige Entwicklungsanstrengungen unternommen werden müssen, um dieses Verfahren stabil nutzbar zu machen. In der genannten Schrift wird ein Modell benutzt, das mechanische Eigenschaften nach der Wärmebehandlung berechnet, die auf einem oder mehreren Parametern basieren, die aus dem Prozess vor oder während der Wärmebehandlung stammen. Um dieses Verfahren stabil zu halten, sind Daten erforderlich, die nicht immer zur Verfügung stehen. Weiterhin sind Daten aus vorlaufenden Prozessen erforderlich, die entsprechenden individuellen Segmenten des Bandes zugewiesen werden müssen, was in der Praxis mitunter schwierig ist.

Es existieren verschiedene vorbekannte Lösungen für die Überwachung und Steuerung eines gattungsgemäßen oder ähnlichen Prozesses, wozu auf folgende Dokumente hingewiesen wird: DE 28 17 742 C2, EP 0 189 040 B1, JP 9033 455 A, EP 1 233 265 A1, DE 11 2004 002 759 T5, US 7 092 843 B2, US 2010/0219567 A1, EP 2 557 183 A1, DE 10 2013 225 279 A1 und JP 2075 744 A.

Bislang gibt es allerdings kein Verfahren, das in hinreichend einfacher Weise eine stabile Steuerung bzw. Regelung einer vorgegebenen Qualität eines metallischen Produkts nach der Wärmebehandlung bzw. dem Walzen sicherstellt.

Der Erfindung liegt daher die Aufgabe zugrunde, ein gattungsgemäßes Verfahren so weiterzuentwickeln, dass die Qualität des hergestellten Produkts erhöht werden kann. Dabei soll auf bekannte und stabil arbeitende Messverfahren zurückgegriffen werden, die so genutzt werden, dass in einfacher und somit wirtschaftlicher Weise das genannte Ziel erreicht werden kann.

Die Lösung dieser Aufgabe durch die Erfindung ist dadurch gekennzeichnet, dass das Verfahren die Schritte aufweist:
a) Messung des Wertes einer Materialeigenschaft des Produkts an der zweiten Stelle, wobei die Materialeigenschaft die Mikrostruktur des Materials des Produkts wiedergibt oder einen Parameter betrifft, der mit der Mikrostruktur des Materials des Produkts korreliert, wobei die Messung die Bestrahlung des Produkts mit Röntgenstrahlung und die Ermittlung der Beugung der Röntgenstrahlung (Röntgendiffraktion) an der Kristallstruktur des Materials des Produkts ist oder umfasst;
b) Zuleiten des an der zweiten Stelle gemessenen Wertes der Materialeigenschaft an die Steuer- und/oder Regelvorrichtung, Vergleich des gemessenen Wertes mit einem in der Steuer- und/oder Regelvorrichtung gespeicherten Wert und Anpassung mindestens eines Parameters der Walz- und/oder Wärmebehandlungsoperation, sofern der gemessene Wert der Materialeigenschaft vom gespeicherten Wert über eine zulässige Toleranz hinaus abweicht,
c) Messung mindestens eines Wertes einer Qualitäts-Materialeigenschaft des Produkts an der vierten Stelle, wobei die Qualitäts-Materialeigenschaft ein Qualitätskriterium des Produkts wiedergibt oder einen Parameter betrifft, der mit einem Qualitätskriterium des Produkts korreliert;
d) Vergleich des gemessenen Wertes der Qualitäts-Materialeigenschaft mit einem gespeicherten Wert für die Qualitäts-Materialeigenschaft und Veranlassen mindestens einer Maßnahme zur Beeinflussung der Qualitäts-Materialeigenschaft, sofern der gemessene Wert der Qualitäts-Materialeigenschaft von dem gespeicherten Wert über eine zulässige Toleranz hinaus abweicht.

Das Walzen kann ein Warmwalzen von Band sein und die zweite Stelle hinter der Fertigstelle oder innerhalb einer Kühlstrecke liegen und die vierte Stelle innerhalb oder am Ende einer Kühlstrecke oder zwischen einer Kühlstrecke und einem Haspel liegen.

Die Wärmebehandlung kann in einer kontinuierlichen Glühlinie oder in einer Feuerverzinkung stattfinden, wobei die zweite Stelle vorzugsweise nach oder in einer Heizzone oder in oder nach einer Haltezone oder in oder nach einer Slow Cooling oder in oder nach einer Schnellkühlung liegt und die vierte Stelle in oder nach einer Haltezone oder in oder nach einer Slow Cooling oder in oder nach einer Schnellkühlung oder in oder nach einem Overaging-Ofen oder zwischen einem Overaging-Ofen und einem Haspel liegt. Das Walzen kann ein Walzen von Blech oder Grobblech sein, wobei die zweite Stelle vorzugsweise in oder nach einem Gerüstbereich oder in oder nach einer Kühlstrecke liegt und die vierte Stelle innerhalb oder am Ende einer Kühlstrecke oder in oder nach einem Kühlbett liegt.

Einer der angepassten technologischen Parameter kann die Abnahmedicke, die Produkttemperatur, die Fördergeschwindigkeit, die Abkühlrate, die Aufheizrate, die Haltezeit, die Ofentemperatur, die Walzkraft und/oder die Wassermenge sein.

Das Verfahren kann weiterhin den Schritt aufweisen: e) Vergleich des an der zweiten Stelle gemessenen Wertes der Materialeigenschaft mit einem in der Steuer- und/oder Regelvorrichtung gespeicherten Wert und Anpassung mindestens eines Parameters der weiteren Bearbeitungsoperation, sofern der gemessene Wert der Materialeigenschaft vom gespeicherten Wert über eine zulässige Toleranz hinaus abweicht. In diesem Falle kann vorgesehen sein, dass einer der angepassten Parameter die Abnahmedicke, die Produkttemperatur, die Fördergeschwindigkeit, die Abkühlrate, die Aufheizrate und/oder die Haltezeit ist.

Eine gemäß obigem Schritt d) getroffene Maßnahme kann eine Anpassung mindestens eines Parameters der Walz- und/oder Wärmebehandlungsoperation, eine Anpassung mindestens eines Parameters der weiteren Bearbeitungsoperation und/oder eine Anpassung der gemäß obigem Schritt b) in der Steuer- und/oder Regelvorrichtung gespeicherten Werte für die Materialeigenschaft sein. Generell können aber auch andere Werte in der Steuer- und/oder Regelvorrichtung geändert werden. Zur besagten Anpassung des mindestens einen Parameters und/oder zur Anpassung der in der Steuer- und/oder Regelvorrichtung gespeicherten Werte kann dabei ein Computermodell verwendet werden.

Eine Weiterbildung sieht vor, dass aus einer Anzahl hergestellter Bänder oder Bleche eine entsprechende Anzahl Coils gewickelt wird, wobei gemäß obigem Schritt d) die Anpassung der gemäß obigem Schritt b) in der Steuer- und/oder Regelvorrichtung gespeicherten Werte für die Materialeigenschaft bei der Produktion eines hergestellten Bandes bzw. Blechs für die Produktion eines später hergestellten Bandes bzw. Blechs erfolgt.

Die Materialeigenschaft des Produkts kann beispielsweise der Phasenzustand, die Struktur, die Korngröße und/oder der Rekristallisationsgrad, die Textur und/oder die Anisotropie des Materials des Produkts sein.

Die oben genannte Qualitäts-Materialeigenschaft des Produkts ist der Phasenzustand und/oder die Streckgrenze und/oder die Zugfestigkeit und/oder die Bruchdehnung und/oder die Korngröße des Materials des Produkts.

Die Ermittlung der Qualitäts-Materialeigenschaft kann durch einen Zugversuch, durch die Bestrahlung des Produkts mit Röntgenstrahlung und die Ermittlung der Beugung der Röntgenstrahlung (Röntgendiffraktion) an der Kristallstruktur des Materials des Produkts erfolgen.

Mindestens ein gemessener oder abgeleiteter Wert aus der Ermittlung der Materialeigenschaft für die Ermittlung der Qualität-Materialeigenschaft kann verwendet und benutzt werden, um die Genauigkeit der Ermittlung der Qualität-Materialeigenschaft zu verbessern.

Mindestens ein gemessener oder abgeleiteter Wert aus der Ermittlung der Qualität-Materialeigenschaft für die Ermittlung der Materialeigenschaft kann verwendet und benutzt werden, um die Genauigkeit der Ermittlung der Materialeigenschaft zu verbessern.

Die oben genannte Messung des Wertes einer Materialeigenschaft des Bandes an der zweiten Stelle kann erfolgen, wobei das Band an der zweiten Stelle eine Temperatur von mindestens 200 °C aufweist.

Die Erfindung stellt also auf eine Online-Messung des Metallbandes bei seiner Herstellung ab, um die Qualität des Bandes und der hieraus hergestellten Produkte zu verbessern.

Die vorliegende Erfindung erlaubt eine Verbesserung der Steuerung bzw. Regelung des Herstellungsprozesses für ein metallisches Produkt, insbesondere für ein Band oder ein Blech, unter Einsatz von Online-Messungen sowie der Überwachung der Endqualität des Bandes. Die Erfindung wird insbesondere bei der Wärmebehandlung oder beim Warmwalzen eines metallischen Bandes eingesetzt.

Vorgesehen ist, dass ein Messsystem installiert wird, das für die Überwachung der mikrostrukturellen Eigenschaften während der Herstellung tauglich ist, wodurch auf der einen Seite eine einfache Regelung (in geschlossener Regelschleife) für die (insbesondere in Fördererrichtung) zurückliegenden Prozesse und auf der anderen Seite eine Steuerung (nicht-geschlossene Steuerung) für die (insbesondere in Fördererrichtung) anstehenden bzw. nachkommenden Prozesse möglich ist. Die Mikrostruktur des Materials des Bandes hat eine gute Korrelation mit den zum Schluss vorliegenden mechanischen Eigenschaften; insbesondere liegt eine bessere Korrelation vor, als wenn die Temperatur oder die Geschwindigkeit des Produkts (d. h. insbesondere des Bandes) als Prozessgröße überwacht wird. Somit ist vorteilhaft kein aufwändiges Computermodell nötig, um die Materialeigenschaften am Ende des Prozesses zu bestimmen.

Allerdings ist die Online-Überwachung der Mikrostruktur des Materials des Produkts (d. h. insbesondere des Bandes) schwierig, was sich aus der Forderung nach einer zerstörungsfreien, kontinuierlichen, robusten und genauen Messung innerhalb der rauen Umgebungsbedingungen ergibt. Ferner erfordert das Auffinden geeigneter Zielgrößen für die Regelung im geschlossenen Regelkreis bzw. geeigneter Steuerdaten für eine offene Steuerung (also im nicht-geschlossenen Regelkreis) einen hohen Aufwand. Demgemäß müssen geeignete Korrelationen zwischen den gewünschten Daten betreffend die am Ende des Prozesses vorliegenden Materialeigenschaften mit den gemessenen mikrostrukturellen Eigenschaften am Ort der Messung vorliegen. Derartige Korrelationen können allerdings fachmännisch auf der Basis von Laborexperimenten und Erfahrungswerten aus der Praxis gewonnen werden.

Die nach der vorliegenden Erfindung bevorzugt vorgesehene Möglichkeit, mikrostrukturelle Eigenschaften des Materials des Produkts (d. h. insbesondere des Bandes) zu ermitteln, ist die Röntgen-Diffraktion (X-Ray Diffraction), die die Beugung eines Röntgenstrahls als Funktion des Abstandes der Kristalle in einer Kristallstruktur des Metalls nutzt. Ein Detektor misst die Intensität des Röntgenstrahls als Funktion des Beugewinkels. Diese Daten können genutzt werden, um einen Parameter zu gewinnen, der die Mikrostruktur des bestrahlten Materials beschreibt, wie beispielsweise die Kristallinität, die Phasen-Zusammensetzung, die Korngröße, die internen und externen Spannungen sowie die Struktur. Diese Technologie ist als solche bekannt, wozu exemplarisch auf folgende Dokumente hingewiesen wird: JP 2005 171 324 A, EP 0 189 040 B1, DE 23 40 028 A1 und WO 2006/047267 A2. Allerdings ist der Einsatz von Online-Messungen für die Materialeigenschaften nicht weit verbreitet, um den Herstellungsprozess eines Metallbandes zu überwachen. Vorbekannte Lösungen stellen dabei normalerweise auf eine Datenerhebung ab, um eine einfache Steuerung gemäß vorgegebener Zielgrößen zu erreichen. Eine einfache Methode, um geeignete Zielwerte zu bestimmen, ist bisher nicht bekannt.

Nach der vorliegenden Erfindung wird mindestens eine Messung durchgeführt, die bei einem Produkt (d. h. insbesondere Band) erfolgt, das vorzugsweise mindestens 200 °C warm ist, um eine Materialeigenschaft (IW) zu ermitteln. Besagte Materialeigenschaft ist eine Eigenschaft der Mikrostruktur des Materials des Produkts bzw. eine solche, die mit der Mikrostruktur des Materials des Produkts korreliert. Eingesetzt wird bevorzugt die Röntgen-Diffraktion, alternativ aber auch die Messung magnetische Eigenschaften oder eine Laser-Ultraschallmessung. Gemäß dem Messergebnis wird mindestens ein Fertigungsparameter über die Steuer-bzw. Regeleinrichtung gesteuert bzw. geregelt, wobei der ermittelte Messwert zu Grunde gelegt wird. Über ein weiteres Messelement kann die Qualität des fertigen Produkts am Ende des Prozesses, also nach der Wärmebehandlung, ermittelt und für den weiteren Prozess berücksichtigt werden.

Weicht der gemessene Wert von einem vorgegebenen Sollwert ab, kann über die Steuer- bzw. Regeleinrichtung ein Nachregeln des entsprechenden Prozessparameters des vorlaufenden Prozesses (also des Prozesses, der der Messung - vorzugsweise in Förderrichtung des Bandes - vorgelagert ist) erfolgen. Weiterhin kann auch ein nachfolgender Prozess (also ein Prozess, der der Messung in Förderrichtung nachfolgt) von der Steuer- bzw. Regeleinrichtung durch den Messwert verändert werden.

Der Sollwert kann dabei durch einen Prozess berechnet werden, der sich durch mindestens einen Parameter bestimmt, der vor oder während der Wärmebehandlung des Materials des Produkts gewonnen wird.

Der Sollwert bzw. ein Verfahren, um den Sollwert zu ermitteln, kann für nachfolgende Coils angepasst werden, falls die am Ende des Prozesses vorliegende Materialqualität von einem Zielwert abweicht.

Besagte Anpassung der Fertigungsparameter kann dabei sowohl (insbesondere für die der Messung vorlaufenden Prozesse) geregelt als auch (insbesondere für die der Messung nachlaufenden Prozesse) gesteuert werden. Das gilt sowohl mit Blick auf die Messung während des Prozesses als auch für eine abschließende Messung der Qualität des Produkts.

Die gemessenen Werte für die Materialeigenschaft sowohl während des Fertigungsprozesses des Produkts als auch hinsichtlich der vorgegebenen Qualität desselben können auch eingesetzt werden, um die Parameter für Computermodelle zu verbessern.

Die Messvorrichtung kann hinsichtlich ihrer Position in Fördererrichtung und auch in Richtung quer hierzu verändert werden, um Messungen an geeigneten Punkten des Produkts vornehmen zu können und so die Materialeigenschaften bzw. die Qualität des Produkts optimal zu erkennen.

Die Messvorrichtung kann auch am Ende einer langsamen oder schnellen Kühlstrecke angeordnet werden. Sie kann auch innerhalb der Wasserkühlung in einem Warmwalzwerk angeordnet werden.

Die Messvorrichtung misst bevorzugt per Röntgen-Diffraktion zumindest einen Spitzenwert für die interessierenden Phasen des Materials. Dieses Messverfahren hat sich bei der vorliegenden Erfindung in besonderer Weise bewährt.

Die mit der Messvorrichtung gemessenen Daten erlauben die Verbesserung der Vorhersage der mechanischen Eigenschaften des Metallbandes durch eine zerstörungsfreie Qualitätskontrolle. Die Zerstörungsfreiheit ist durch die oben genannten Messmethoden sichergestellt.

Mittels der zerstörungsfreien Messung kann sowohl während des Prozesses als auch am Ende desselben das metallische Band untersucht werden. Die Messwerte können in eine Korrelation mit dem am Ende des Prozesses vorliegenden mechanischen Eigenschaften des Produkts gebracht werden, so dass im Online-Verfahren eine verbesserte Steuerung und Vorhersage der vorgegebenen Qualität des Produkts möglich wird.

Hierzu wird gezielt die Mikrostruktur des Materials des Produkts über die gesamte Länge des Produkts während des Herstellungsprozesses gemessen, was es ermöglicht, die Qualität des aus dem Produkt hergestellten Teils zu überwachen und auf einem hinreichenden Niveau aufrecht zu erhalten.

Somit können die Herstellkosten einschließlich gegebenenfalls geltend gemachter Nachfolgekosten infolge mangelnder Qualität des Bandes vermindert werden.

Die gezielte Überwachung und Beurteilung der Mikrostruktur des Materials des Bandes ermöglicht die Nutzung folgender Vorteile:
Der Produktionsprozess des Bandes kann an die ermittelte Mikrostruktur des Materials angepasst werden, womit eine gleichbleibende Qualität des Bandes über dessen Länge erzielt werden kann.

Bei verbesserter Qualität des Bandes werden Ausschuss-Kosten fehlerhafter Produkte vermindert und so Nachfolgekosten (wegen zu geringer Qualität des Bandes, aus dem das Produkt besteht) vermieden.

Durch die gezielte Überwachung der Mikrostruktur des Materials des Bandes kann weiterhin der Herstellungsprozess optimiert werden, da die unmittelbare Messung es ermöglicht, Sicherheitsschwellen bei der Herstellung anzupassen bzw. herabzusetzen.

Schwankungen in den Produkteigenschaften können ihren Ursprung in vorgelagerten Prozessen haben. Ein wesentlicher Vorteil des vorgeschlagenen Verfahrens liegt darin, dass eine bessere Prozesskontrolle möglich ist, auch wenn keine konkreten Kenntnisse über die Vorprozesse vorliegen.

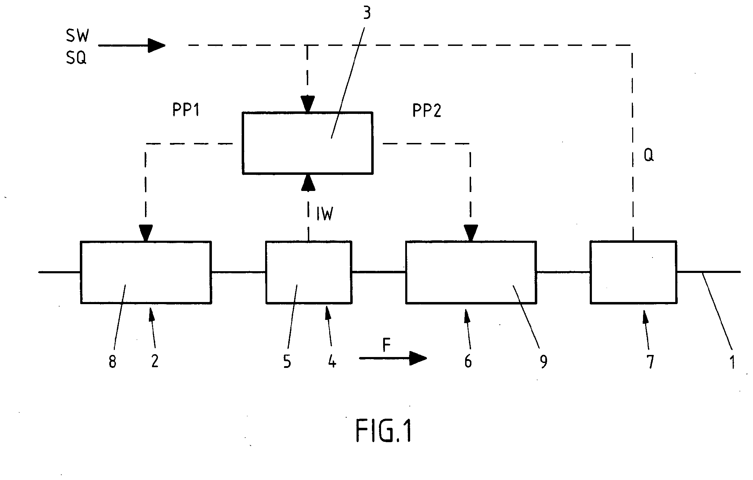

In der Zeichnung ist ein Ausführungsbeispiel der Erfindung dargestellt. Die einzige Figur zeigt schematisch den Fertigungsprozess eines Stahlbandes.

In der Figur ist ein Beispiel für einen Prozess schematisch dargestellt, mit dem ein metallisches Band 1 (Stahlband) hergestellt wird. Der dargestellte Prozess ist ein kontinuierlicher Wärmebehandlungsprozess eines Bandes, bei dem das Band 1 in einen benötigten Temperaturbereich erwärmt wird.

Zu erkennen ist eine erste Stelle 2, an der ein Ofen 8 angeordnet ist. In Förderrichtung F folgt eine Messvorrichtung 5, die an einer zweiten Stelle 4 angeordnet ist. Weiterhin folgt in Förderrichtung F an einer dritten Stelle 6 eine Kühlvorrichtung 9. An einer in Förderrichtung F noch weiter nachfolgenden vierten Stelle 7 erfolgt eine Qualitätsmessung der vorliegenden Qualität des Bandes 1.

Der gesamte Produktionsprozess des Bandes 1 wird von einer Steuer- und/oder Regelvorrichtung 3 gesteuert bzw. geregelt, wobei ein Fertigungsparameter PP1 dem Ofen 8 sowie ein Fertigungsparameter PP2 der Kühlvorrichtung 9 vorgegeben wird.

Der Steuer- und/oder Regelvorrichtung 3 wird ein Wert SW für eine Materialeigenschaft des Bandes 1 sowie ein Wert SQ für eine Qualität-Materialeigenschaft des Bandes 1 vorgegeben. Bei den genannten Werten handelt es sich also um Sollwerte.

Die Messvorrichtung 5 ermittelt eine Materialeigenschaft IW des Bandes 1, also einen Ist-Wert.

Im Bereich der vierten Stelle 7 erfolgt eine Messung einer Qualität-Materialeigenschaft Q des Bandes 1.

Die Messvorrichtung 5 befindet sich also hinter dem Ofen 8 und misst (ggf. nach einer Abkühlung des Bandes 1 durch Wässern) bevorzugt mittels Röntgen-Diffraktion eine Eigenschaft des Bandes 1, die auf die Mikrostruktur des Bandes 1 schließen lässt, beispielsweise die Anteile der jeweiligen Phasen im Material. Dieser Messwert IW wird genutzt, um den Erwärmungsprozess über den Parameter PP1 zu regeln, so dass die gemessenen Phasenanteile im Material des Bandes 1 nicht den vorgegebenen gespeicherten Wert SW verlassen bzw. innerhalb einer vorgegebenen Toleranz halten.

Aufgrund des gemessenen Messwertes IW kann der Prozess im Ofen 8 im geschlossenen Regelkreis über die Steuer- und/oder Regelvorrichtung 3 betrieben werden; der nachfolgende Prozess in der Kühlvorrichtung 9 kann indes als offene Steuerung über die Steuer- und/oder Regelvorrichtung 3 betrieben werden.

Nach dem Fertigstellen des Bandes wird an der vierten Stelle 7 dann die Qualität des Bandes 1, also die Qualitäts-Materialeigenschaft Q, gemessen.

Dieser aktuelle Ist-Wert der Qualitäts-Materialeigenschaft Q kann dabei einer Software bzw. einem Computermodell vorgegeben werden, die daraufhin nach Art eines lernenden Algorithmus die vorgegebenen gespeicherten Werte SW und/oder die Steuerungsparameter für die Kühlvorrichtung 9 modifiziert bzw. anpasst, so dass bei der Produktion weiterer Coils optimierte bzw. angepasste Fertigungsparameter zu Grunde gelegt werden. Damit kann erreicht werden, dass weitere Coils mit einer verbesserten Anpassung an gewünschte mechanische Eigenschaften gefertigt werden. Gleichermaßen können auch die Messwerte der Messvorrichtung 5 im genannten Sinne verwendet werden, um die Fertigung weiterer Coils zu verbessern.

Zum Ausführungsbeispiel sei noch angemerkt, dass natürlich bei anderen Ausgestaltungen der Erfindung statt dem Ofen 8 auch andere Elemente zur Bearbeitung des Materials angeordnet sein können, insbesondere ein Walzwerk oder eine Kühlvorrichtung.

### Bezugszeichenliste:

- 1: Band
- 2: erste Stelle
- 3: Steuer- und/oder Regelvorrichtung
- 4: zweite Stelle
- 5: Messvorrichtung
- 6: dritte Stelle
- 7: vierte Stelle
- 8: Ofen
- 9: Kühlvorrichtung

- IW: Materialeigenschaft des Bandes
- Q: Qualitäts-Materialeigenschaft des Bandes

- SW: gespeicherter Wert für Materialeigenschaft (Sollwert)
- SQ: gespeicherter Wert für Qualitäts-Materialeigenschaft (Sollwert für die Qualität)
- PP1: Parameter
- PP2: Parameter

- F: Förderrichtung

## Patentansprüche

1. Verfahren zum Walzen und/oder zur Wärmebehandlung eines metallischen Produkts (1), insbesondere eines Bandes oder Blechs, wobei das Produkt (1) an einer ersten Stelle (2) einer Walz- und/oder Wärmebehandlungsoperation unterzogen wird, die von einer Steuer- und/oder Regelvorrichtung (3) gesteuert und/oder geregelt wird, wobei das Produkt (1) an einer der ersten Stelle (2) nachgelagerten zweiten Stelle (4) einer Messung mittels einer Messvorrichtung (5) unterzogen wird, wobei das Produkt (1) an einer der zweiten Stelle (4) nachgelagerten dritten Stelle (6) einer weiteren Bearbeitungsoperation unterzogen wird und wobei das Produkt (1) an einer der dritten Stelle (6) nachgelagerten vierten Stelle (7) in einer vorgegebenen Qualität vorliegt, wobei die Qualität durch eine Qualitäts-Materialeigenschaft (Q) des Produkts (1) in Form des Phasenzustands und/oder der Streckgrenze und/oder der Zugfestigkeit und/oder der Bruchdehnung und/oder der Korngröße des Materials des Produkts (1) **gekennzeichnet ist,**
**dadurch** gekennzeichnet, dass
das Verfahren die Schritte aufweist:
a) Messung des Wertes einer Materialeigenschaft (IW) des Produkts (1) an der zweiten Stelle (4), wobei die Materialeigenschaft (IW) die Mikrostruktur des Materials des Produkts (1) wiedergibt oder einen Parameter betrifft, der mit der Mikrostruktur des Materials des Produkts (1) korreliert, wobei die Messung die Bestrahlung des Produkts (1) mit Röntgenstrahlung und die Ermittlung der Beugung der Röntgenstrahlung (Röntgendiffraktion) an der Kristallstruktur des Materials des Produkts (1) ist oder umfasst,
b) Zuleiten des an der zweiten Stelle (4) gemessenen Wertes der Materialeigenschaft (IW) an die Steuer- und/oder Regelvorrichtung (3), Vergleich des gemessenen Wertes mit einem in der Steuer- und/oder Regelvorrichtung (3) gespeicherten Wert (SW) und Anpassung mindestens eines Parameters (PP1) der Walz- und/oder Wärmebehandlungsoperation, sofern der gemessene Wert der Materialeigenschaft vom gespeicherten Wert (SW) über eine zulässige Toleranz hinaus abweicht,
c) Messung mindestens eines Wertes der Qualitäts-Materialeigenschaft (Q) des Produkts (1) an der vierten Stelle (7), wobei die Qualitäts-Materialeigenschaft (Q) ein Qualitätskriterium des Produkts (1) wiedergibt oder einen Parameter betrifft, der mit einem Qualitätskriterium des Produkts (1) korreliert;
d) Vergleich des gemessenen Wertes der Qualitäts-Materialeigenschaft (Q) mit einem gespeicherten Wert für die Qualitäts-Materialeigenschaft und Veranlassen mindestens einer Maßnahme zur Beeinflussung der Qualitäts-Materialeigenschaft (Q), sofern der gemessene Wert der Qualitäts-Materialeigenschaft (Q) von dem gespeicherten Wert über eine zulässige Toleranz hinaus abweicht.

2. Verfahren nach Anspruch 1, **dadurch gekennzeichnet, dass** das Walzen ein Warmwalzen von Band ist und die zweite Stelle (4) hinter der Fertigstelle oder innerhalb einer Kühlstrecke liegt und die vierte Stelle (7) innerhalb oder am Ende einer Kühlstrecke oder zwischen einer Kühlstrecke und einem Haspel liegt.

3. Verfahren nach Anspruch 1 oder 2, **dadurch gekennzeichnet, dass** die Wärmebehandlung in einer kontinuierlichen Glühlinie oder in einer Feuerverzinkung stattfindet, wobei die zweite Stelle (4) vorzugsweise nach oder in einer Heizzone oder in oder nach einer Haltezone oder in oder nach einer Slow Cooling oder in oder nach einer Schnellkühlung liegt und die vierte Stelle (7) in oder nach einer Haltezone oder in oder nach einer Slow Cooling oder in oder nach einer Schnellkühlung oder in oder nach einem Overaging oder zwischen einem Overaging und einem Haspel liegt.

4. Verfahren nach einem der Ansprüche 1 bis 3, **dadurch gekennzeichnet, dass** das Walzen ein Walzen von Blech oder Grobblech ist, wobei die zweite Stelle (4) vorzugsweise in oder nach einem Gerüstbereich oder in oder nach einer Kühlstrecke liegt und die vierte Stelle (7) innerhalb oder am Ende einer Kühlstrecke oder in oder nach einem Kühlbett liegt.

5. Verfahren nach einem der Ansprüche 1 bis 4, **dadurch gekennzeichnet, dass** einer der angepassten Parameter (PP1) die Abnahmedicke, die Produkttemperatur, die Fördergeschwindigkeit, die Abkühlrate, die Aufheizrate, die Haltezeit, die Ofentemperatur, die Walzkraft und/oder die Wassermenge ist.

6. Verfahren nach einem der Ansprüche 1 bis 5, **dadurch gekennzeichnet, dass** das Verfahren weiterhin den Schritt aufweist:
e) Vergleich des an der zweiten Stelle (4) gemessenen Wertes der Materialeigenschaft (IW) mit einem in der Steuer- und/oder Regelvorrichtung (3) gespeicherten Wert und Anpassung mindestens eines Parameters (PP2) der weiteren Bearbeitungsoperation, sofern der gemessene Wert der Materialeigenschaft (IW) vom gespeicherten Wert über eine zulässige Toleranz hinaus abweicht.

7. Verfahren nach Anspruch 6, **dadurch gekennzeichnet, dass** einer der angepassten Parameter (PP2) die Abnahmedicke, die Produkttemperatur, die Fördergeschwindigkeit, die Abkühlrate, die Aufheizrate und/oder die Haltezeit ist.

8. Verfahren nach einem der Ansprüche 1 bis 7, **dadurch gekennzeichnet, dass** eine gemäß Schritt d) von Anspruch 1 getroffene Maßnahme eine Anpassung mindestens eines Parameters der Walz- und/oder Wärmebehandlungsoperation, eine Anpassung mindestens eines Parameters der weiteren Bearbeitungsoperation und/oder eine Anpassung der gemäß Schritt b) von Anspruch 1 in der Steuer- und/oder Regelvorrichtung (3) gespeicherten Werte (SW) für die Materialeigenschaft (IW) ist.

9. Verfahren nach Anspruch 8, **dadurch gekennzeichnet, dass** zur Anpassung des mindestens einen Parameters und/oder zur Anpassung der in der Steuer- und/oder Regelvorrichtung (3) gespeicherten Werte (SW) ein Computermodell verwendet wird.

10. Verfahren nach einem der Ansprüche 1 bis 9, **dadurch gekennzeichnet, dass** aus einer Anzahl hergestellter Bänder oder Bleche eine entsprechende Anzahl Coils gewickelt wird, wobei gemäß Schritt d) von Anspruch 1 die Anpassung der gemäß Schritt b) von Anspruch 1 in der Steuer- und/oder Regelvorrichtung (3) gespeicherten Werte (SW) für die Materialeigenschaft (IW) bei der Produktion eines hergestellten Bandes (1) oder Blechs für die Produktion eines später hergestellten Bandes (1) oder Blechs erfolgt.

11. Verfahren nach einem der Ansprüche 1 bis 10, **dadurch gekennzeichnet, dass** die Materialeigenschaft (IW) des Produkts (1) der Phasenzustand, die Struktur, die Korngröße, der Rekristallisationsgrad, die Textur und/oder die Anisotropie des Materials des Produkts (1) ist.

12. Verfahren nach einem der Ansprüche 1 bis 11, **dadurch gekennzeichnet, dass** die Ermittlung der Qualitäts-Materialeigenschaft (Q) durch einen Zugversuch, durch die Bestrahlung des Produkts (1) mit Röntgenstrahlung und die Ermittlung der Beugung der Röntgenstrahlung (Röntgendiffraktion) an der Kristallstruktur des Materials des Produkts (1) erfolgt.

13. Verfahren nach einem der Ansprüche 1 bis 12, **dadurch gekennzeichnet, dass** mindestens ein gemessener oder abgeleiteter Wert aus der Ermittlung der Materialeigenschaft (IW) für die Ermittlung der Qualität-Materialeigenschaft (Q) verwendet und benutzt wird, um die Genauigkeit der Ermittlung der Qualität-Materialeigenschaft (Q) zu verbessern.

14. Verfahren nach einem der Ansprüche 1 bis 13, **dadurch gekennzeichnet, dass** mindestens ein gemessener oder abgeleiteter Wert aus der Ermittlung der Qualität-Materialeigenschaft (Q) für die Ermittlung der Materialeigenschaft (IW) verwendet und benutzt wird, um die Genauigkeit der Ermittlung der Materialeigenschaft (IW) zu verbessern.

## Claims

1. Method for the rolling and/or thermal treatment of a metallic product (1), particularly a strip or sheet, wherein the product (1) is subjected at a first location (2) to a rolling and/or thermal treatment operation which is controlled and/or regulated by a controlling and/or regulating device (3), wherein the product (1) at a second location (4) downstream of the first location (2) is subjected to a measurement by means of a measuring device (5), wherein the product (1) at a third location (6) downstream of the second location (4) is subjected to a further processing operation and wherein the product (1) at a fourth location (7) downstream of the third location (6) is present in a predetermined quality, wherein the quality is **characterised by** a qualitative material characteristic (Q) of the product (1) in the form of the phase state and/or the yield point and/or the tensile strength and/or the breaking elongation and/or the grain size of the material of the product (1),
**characterised in that**
the method comprises the steps:
a) measuring the value of a material characteristic (IW) of the product (1) at the second location (4), wherein the material characteristic (IW) reproduces the microstructure of the material of the product (1) or relates to parameter correlated with the microstructure of the material of the product (1), wherein the measuring is or comprises irradiation of the product (1) by X-ray radiation and determination of the refraction of the X-ray radiation (X-ray diffraction) at the crystal structure of the material of the product (1),
b) conducting the value, which is measured at the second location (4), of the material characteristic (IW) to the controlling and/or regulating device (3), comparing the measured value with a value (SW) stored in the controlling and/or regulating device (3) and adapting at least one parameter (PP1) of the rolling and/or thermal treatment operation insofar as the measured value of the material characteristic differs from the stored value (SW) beyond a permissible tolerance,
c) measuring at least one value of the qualitative material characteristic (Q) of the product (1) at the fourth location (7), wherein the qualitative material characteristic (Q) reproduces a quality criterion of the product (1) or relates to a parameter correlated with a quality criterion of the product (1);
d) comparing the measured value of the qualitative material characteristic (Q) with a stored value for the qualitative material characteristic and initiating at least one measure for influencing the qualitative material characteristic (Q) insofar as the measured value of the qualitative material characteristic (Q) differs from the stored value beyond a permissible tolerance.

2. Method according to claim 1, **characterised in that** the rolling is hot-rolling of strip and the second location (4) lies behind the finishing point or within a cooling path and the fourth location (7) lies within or at the end or a cooling path or between a cooling path and a coiler.

3. Method according to claim 1 or 2, **characterised in that** the thermal treatment takes place in a continuous annealing line or in a hot-galvanising process, wherein the second location (4) preferably lies after or in a heating zone or in or after a holding zone or in or after a slow-cooling stage or in or after a rapid-cooling stage and the fourth location (7) lies in or after a holding zone or in or after a slow-cooling stage or in or after a rapid-cooling stage or in or after an overaging stage or between an overaging stage and a coiler.

4. Method according to any one of claims 1 to 3, **characterised in that** the rolling is a rolling of sheet or heavy plate, wherein the second location (4) preferably lies in or after a stand region or in or after a cooling path and the fourth location (7) lies within or at the end of a cooling path or in or after a cooling bed.

5. Method according to any one of claims 1 to 4, **characterised in that** one of the adapted parameters (PP1) is the reduction thickness, the product temperature, the conveying speed, the rate of cooling down, the rate of heating up, the holding time, the furnace temperature, the rolling force and/or the water quantity.

6. Method according to any one of claims 1 to 5, **characterised in that** the method further comprises the step:
e) comparing the value, which is measured at the second location (4), of the material characteristic (IW) with a value stored in the controlling and/or regulating device (3) and adapting at least one parameter (PP2) of the further processing operation insofar as the measured value of the material characteristic (IW) differs from the stored value beyond a permissible tolerance.

7. Method according to claim 6, **characterised in that** one of the adapted parameters (PP2) is the reduction thickness, the product temperature, the conveying speed, the rate of cooling down, the rate of heating up and/or the holding time.

8. Method according to any one of claims 1 to 7, **characterised in that** a measure undertaken in accordance with step d) of claim 1 is adaptation of at least one parameter of the rolling and/or thermal treatment operation, adaptation of at least one parameter of the further processing operation and/or adaptation of the values (SW), which are stored in the controlling and/or regulating device (3) in accordance with step b) of claim 1, for the material characteristic (IW).

9. Method according to claim 8, **characterised in that** a computer model is used for adaptation of at least one parameter and/or for adaptation of the values (SW) stored in the controlling and/or regulating device (3).

10. Method according to any one of claims 1 to 9, **characterised in that** a corresponding number of coils is wound from a number of produced strips or sheets, wherein according to step d) of claim 1 the adaptation of the values (SW), which are stored in the controlling and/or regulating device (3) in accordance with step b) of claim 1, for the material characteristic (IW) is carried out in the production of a produced strip (1) or sheet for the production of a later produced strip (1) or sheet.

11. Method according to any one of claims 1 to 10, **characterised in that** the material characteristic (IW) of the product (1) is the phase state, the structure, the grain size, the degree of recrystallisation, the texture and/or the anisotropy of the material of the product (1).

12. Method according to any one of claims 1 to 11, **characterised in that** the determination of the qualitative material characteristic (Q) is carried out by a tension test, by irradiation of the product (1) with X-ray radiation and determination of the refraction of the X-ray radiation (X-ray diffraction) at the crystal structure of the material of the product (1).

13. Method according to any one of claims 1 to 12, **characterised in that** at least one measured or derived value from the determination of the material characteristic (IW) is used for determination of the qualitative material characteristic (Q) and employed in order to improve the accuracy of the determination of the qualitative material characteristic (Q).

14. Method according to any one of claims 1 to 13, **characterised in that** at least one measured or derived value from the determination of the qualitative material characteristic (Q) is used for determination of the material characteristic (IW) and employed in order to improve the accuracy of the determination of the material characteristic (IW).

## Revendications

1. Procédé destiné au laminage et/ou destiné au traitement thermique d'un produit métallique (1) en particulier d'une bande ou d'une tôle ; dans lequel on soumet le produit (1), à un premier endroit (2), à une opération de laminage et/ou de traitement thermique qui est commandée et/ou qui est réglée par un dispositif de commande et/ou de réglage (3) ; dans lequel on soumet le produit (1), à un deuxième endroit (4) qui est situé à la suite du premier endroit (2), à une mesure au moyen d'un dispositif de mesure (5) ; dans lequel on soumet le produit (3), à un troisième endroit (6) qui est situé à la suite du deuxième endroit (4), à une opération de traitement supplémentaire ; et dans lequel le produit (1), à un quatrième endroit (7) qui est situé à la suite du troisième endroit (6), est présent avec une qualité prédéfinie ; dans lequel la qualité est **caractérisée par** une propriété matérielle de qualité (Q) du produit (1) sous la forme de l'état de phase et/ou de la limite d'élasticité et/ou de la résistance à la traction et/ou de la résistance à la rupture et/ou de la granulométrie de la matière du produit (1) ;
**caractérisé**
**en ce que** le procédé présente les étapes dans lesquelles :
a) on mesure la valeur d'une propriété matérielle (IW) du produit (1) au deuxième endroit (4) ; dans lequel la propriété matérielle (IW) représente la microstructure de la matière du produit (1) ou concerne un paramètre qui est mis en corrélation avec la microstructure de la matière du produit (1) ; dans lequel la mesure représente ou comprend l'exposition du produit (1) à un rayonnement avec un rayonnement X et la détermination de la modification de la trajectoire du rayonnement X (diffraction des rayons X) par rapport à la structure cristalline de la matière du produit (1) ;
b) on transmet la valeur de la propriété matérielle (IW), qui a été mesurée au deuxième endroit (4), au dispositif de commande et/ou de réglage (3) ; on compare la valeur qui a été mesurée à une valeur (SW) qui a été mis en mémoire dans le dispositif de commande et/ou de réglage (3) ; et on adapte au moins un paramètre (PP1) de l'opération de laminage et/ou de traitement thermique, si tant est que la valeur de la propriété matérielle qui a été mesurée dévie de la valeur (SW) qui a été mise en mémoire, au-delà d'une tolérance admissible ;
c) on mesure au moins une valeur de la propriété matérielle de qualité (Q) du produit (1) au quatrième endroit (7) ; dans lequel la propriété matérielle de qualité (Q) représente un critère de qualité du produit (1) concernant paramètre qui est mis en corrélation avec un critère de qualité du produit (1) ;
d) on compare la valeur de la propriété matérielle de qualité (Q) qui a été mesuré à une valeur qui a été enregistrée pour la propriété matérielle de qualité et on met en œuvre au moins une mesure dans le but d'influencer la propriété matérielle de qualité (Q) pour autant que la valeur mesurée de la propriété matérielle de qualité (Q) dévie de la valeur qui a été enregistrée, au-delà d'une tolérance admissible.

2. Procédé selon la revendication 1 **caractérisé en ce que** le laminage représente un laminage d'une bande à chaud et le deuxième endroit (4) est situé derrière l'endroit de finition ou au sein d'un tronçon de refroidissement et le quatrième endroit (7) est située à la fin d'un tronçon de refroidissement ou entre en tronçon de refroidissement et une bobineuse.

3. Procédé selon la revendication 1 ou 2, **caractérisé en ce que** le traitement thermique a lieu dans une ligne de recuit en continu ou au cours d'une galvanisation à chaud ; dans lequel le deuxième endroit (4) est situé de préférence après une zone de chauffage au sein de cette dernière ou bien dans une zone d'arrêt après cette dernière ou bien dans une zone de refroidissement lent ou après cette dernière ou bien dans une zone de refroidissement rapide ou après cette dernière et le quatrième endroit (7) est situé dans une zone de chauffage ou après cette dernière ou bien dans une zone de refroidissement lent ou après cette dernière ou bien dans une zone de refroidissement rapide ou après cette dernière ou bien dans une zone de survieillissement ou après cette dernière ou bien entre une zone de survieillissement et une bobineuse.

4. Procédé selon l'une quelconque des revendications 1 à 3, **caractérisé en ce que** le laminage représente un laminage d'une tôle ou d'une tôle épaisse ; dans lequel le deuxième endroit (4) est situé de préférence dans la zone d'une cage ou après cette dernière ou bien dans un tronçon de refroidissement ou après ce dernier et le quatrième endroit (7) est situé au sein d'une zone de refroidissement ou à la fin de cette dernière ou bien dans un lit de refroidissement ou après ce dernier.

5. Procédé selon l'une quelconque des revendications 1 à 4, **caractérisé en ce que** l'un des paramètres (PP1) qui a été adapté représente l'épaisseur de la réduction, la température du produit, la vitesse de transport, la vitesse de refroidissement, la vitesse de réchauffement, le temps d'arrêt, la température du four, la force de laminage et/ou la quantité d'eau.

6. Procédé selon l'une quelconque des revendications 1 à 5, **caractérisé en ce que** le procédé présent en outre l'étape dans laquelle :
e) on compare la valeur de la propriété matérielle (IW) qui a été mesurée au deuxième endroit (4) à une valeur qui a été enregistrée dans le dispositif de commande et/ou de réglage (3) et on adapte au moins un paramètre (PP2) de l'opération de traitement supplémentaire, pour autant que la valeur de la propriété matérielle (IW) qui a été mesurée dévie de la valeur qui a été enregistrée au-delà d'une tolérance admissible.

7. Procédé selon la revendication 6, **caractérisé en ce que** l'un des paramètres (PP2) qui a été adapté représente l'épaisseur de la réduction, la température du produit, la vitesse de transport, la vitesse de refroidissement, la vitesse de réchauffement et/ou le temps d'arrêt.

8. Procédé selon l'une quelconque des revendications 1 à 7, **caractérisé en ce qu'**une mesure prise conformément à l'étape d) de la revendication 1 représente une adaptation d'au moins un paramètre de l'opération de laminage et/ou de traitement thermique, une adaptation d'au moins un paramètre de l'opération de traitement supplémentaire et/ou une adaptation de la valeur (SW) destiné à la propriété matérielle (IW) qui a été mise en mémoire dans le dispositif de commande et de réglage (3) conformément à l'étape b) de la revendication 1.

9. Procédé selon la revendication 8, **caractérisé en ce que**, à des fins d'adaptation dudit au moins un paramètre et/ou à des fins d'adaptation des valeurs (SW) qui ont été mises en mémoire dans le dispositif de commande et/ou de réglage (3), on utilise un modèle informatique.

10. Procédé selon l'une quelconque des revendications 1 à 9, **caractérisé en ce que**, à partir d'une multitude de bandes ou de tôles qui ont été fabriquées, on prépare un nombre correspondant de bobines ; dans lequel, conformément à l'étape d) de la revendication 1, l'adaptation des valeurs (SW) pour la propriété matérielle (IW) qui ont été mises en mémoire dans le dispositif de commande et/ou de réglage (3) conformément à l'étape d) de la revendication 1 au cours de la production d'une bande (1) ou d'une tôle qui a été fabriquée, a lieu pour la production d'une bande (1) ou d'une tôle fabriquée ultérieurement.

11. Procédé selon l'une quelconque des revendications 1 à 10, **caractérisé en ce que** la propriété matérielle (IW) du produit (1) représente l'étape de phase, la structure, la granulométrie, le degré de recristallisation, la texture et/ou l'anisotropie de la matière du produit (1).

12. Procédé selon l'une quelconque des revendications 1 à 11, **caractérisé en ce que** la détermination de la propriété matérielle de qualité (Q) a lieu par l'intermédiaire d'un essai de résistance à la traction, par l'intermédiaire de l'exposition du produit (1) à un rayonnement avec un rayonnement X et la détermination de la modification de la trajectoire du rayonnement X (diffraction des rayons X) a lieu par rapport à la structure cristalline de la matière du produit (1)

13. Procédé selon l'une quelconque des revendications 1 à 12, **caractérisé en ce que** l'on utilise et l'on se sert d'au moins une valeur qui a été mesurée ou qui a été déduite à partir de la détermination de la propriété matérielle (IW) pour la détermination de la propriété matérielle de qualité (Q), dans le but d'améliorer la précision de la détermination de la propriété matérielle de qualité (Q).

14. Procédé selon l'une quelconque des revendications 1 à 13, **caractérisé en ce que** l'on utilise et l'on se sert d'au moins une valeur de la propriété matérielle de qualité (Q) qui a été mesurée ou qui a été déduite à partir de la détermination de la propriété matérielle de qualité (Q) pour la détermination de la propriété matérielle (IW), dans le but d'améliorer la précision de la détermination de la propriété matérielle (IW).
